# FASCICULE DE BREVET EUROPEEN

(11) **EP 0 662 895 B1**
(45) Date de publication et mention de la délivrance du brevet: **21.02.1996**
(21) Numéro de dépôt: 93920913.6
(22) Date de dépôt: 22.09.1993
(51) Int. Cl.: B60T 13/565, B60T 13/569

(54) **DISPOSITIF DE FREINAGE ASSISTE A COURSE MASQUEE**
BREMSKRAFTVERSTÄRKER MIT MASKIERTEM HUB
POWER BRAKING SYSTEM WITH A SHORTENED STROKE

(30) Priorité: 30.09.1992 FR 9211623; 21.01.1993 FR 9300571
(43) Date de publication de la demande: 19.07.1995
(73) Titulaire: ALLIEDSIGNAL EUROPE SERVICES TECHNIQUES, F-93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); PEREZ, Revilla, Miguel, F-95100 Argenteuil (FR); LEVRAI, Roland, F-93240 Stains (FR)
(86) Numéro de dépôt international: FR9300917
(87) Numéro de publication internationale: WO9407723

(56) Documents cités:
- EP-A- 0 257 360
- EP-A- 0 337 473
- FR-A- 2 558 126
- US-A- 3 470 695
- US-A- 4 506 592

## Description

La présente invention concerne un dispositif de freinage assisté pour véhicule à moteur, comprenant d'une part un maître-cylindre rempli d'un fluide de freinage et équipé d'un piston hydraulique principal destiné à recevoir une force d'actionnement se composant d'une force d'entrée et d'une force d'assistance agissant toutes deux suivant une direction axiale, et d'autre part un servomoteur pneumatique d'assistance susceptible d'être commandé par application de ladite force d'entrée sur une tige de commande contrôlant l'ouverture d'un clapet, pour exercer ladite force d'actionnement sur le piston hydraulique principal, le servomoteur comportant une enveloppe rigide séparée de façon étanche en deux chambres au moyen au moins d'une cloison mobile, susceptible d'être sollicitée par une différence de pression entre les deux chambres résultant de l'ouverture du clapet et d'entraîner un piston pneumatique, mobile par rapport à l'enveloppe, portant ledit clapet et contribuant au moins à transmettre ladite force d'assistance, le piston hydraulique principal du maître-cylindre comportant lui-même un cylindre mobile, creux, communiquant avec le maître-cylindre, recevant une partie au moins de la force d'assistance, et à l'intérieur duquel coulisse, de façon étanche et suivant la direction axiale, un piston hydraulique secondaire susceptible de recevoir au moins ladite force d'entrée.

Un dispositif de ce type est bien connu dans l'art antérieur et se trouve par exemple décrit dans le brevet US 4 491 058 ou dans le document FR-A-2 558 126.

Un tel dispositif de freinage présente l'avantage, résultant de l'utilisation d'un piston pneumatique mobile par rapport à l'enveloppe rigide, que la course totale disponible pour la tige de commande, donc pour la pédale de frein, est relativement longue, ce qui constitue une condition nécessaire pour assurer le contrôle optimal de la décélération du véhicule au freinage.

Cependant cette condition, bien que nécessaire, n'est pas suffisante, et ce contrôle se trouve amoindri dans les dispositifs actuels de freinage assisté par le fait que l'obtention de la pression minimale nécessaire pour amorcer le freinage requiert une course initiale très importante de la tige de commande.

Le but de la présente invention est de permettre une optimisation du contrôle, par le conducteur d'un véhicule, de la décélération de celui-ci, en proposant un dispositif de freinage assisté à réaction hydraulique propre à exercer un effort de freinage croissant de façon beaucoup plus régulière, en fonction de la course de la tige de commande donc de la pédale de frein, que dans les dispositifs actuels.

A cette fin, le dispositif de la présente invention est essentiellement caractérisé en ce que la cloison mobile est montée coulissante sur le piston pneumatique de manière à pouvoir coulisser par rapport à lui en direction du maître-cylindre, depuis une position relative initiale dans laquelle elle est en butée contre le piston pneumatique suivant une direction opposée à celle qui pointe vers le maître-cylindre, et en ce que cette cloison mobile, lorsqu'elle est sollicitée par une différence de pression, appuie au moins indirectement sur le cylindre mobile en direction du maître-cylindre.

Selon un mode de réalisation préféré, des moyens élastiques sont disposés entre le piston pneumatique et la cloison mobile pour engendrer une force élastique s'opposant au libre coulissement relatif de cette cloison mobile et de ce piston pneumatique, ces moyens élastiques comprenant par exemple un ressort hélicoïdal.

D'autres caractéristiques et avantages de l'invention ressortiront clairement de la description qui en est faite ci-après, à titre indicatif et nullement limitatif, en référence aux dessins annexés sur lesquels :
- la Figure 1 est une vue en coupe partielle d'un servomoteur réalisé conformément à la présente invention,
- Les Figures 2 et 3 sont des vues en coupe partielles d'un servomoteur réalisé conformément à une variante de la présente invention, et observé à des stades de fonctionnement différents, et
- la Figure 4 est une vue en coupe partielle d'un servomoteur réalisé conformément à une autre variante de la présente invention.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 comprenant une membrane 4a et une jupe rigide 4b et susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de dépression (non représentée) à travers une valve anti-retour 6.

La pression dans la chambre arrière 3b est contrôlée par un clapet à trois voies 7, commandé par une tige de commande 8, laquelle est reliée à une pédale de frein (non représentée).

Lorsque la tige de commande 8 est en position de repos, en l'occurrence tirée vers la droite, le clapet 7 établit une communication entre les deux chambres 3a et 3b du servomoteur, ou vient d'une position dans laquelle cette communication a été établie.

La chambre arrière 3b étant alors soumise à la même dépression que la chambre avant 3a, le piston 5 est repoussé vers la droite, en position de repos, par un ressort 9.

L'actionnement de la tige de commande 8 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique.

La différence de pression entre les deux chambres alors ressentie par la membrane 4a exerce sur la cloison mobile 4 une poussée qui tend à la déplacer vers la gauche et à lui permettre d'entraîner le piston 5 qui se déplace à son tour en comprimant le ressort 9.

L'effort de freinage exercé sur la tige de commande 8, ou "force d'entrée" et l'effort d'assistance au freinage, ou "force d'assistance", résultant de la poussée de la cloison mobile 4, sont alors appliqués ensemble suivant l'axe 10 de la tige de poussée 8 en direction du maître-cylindre 2, et se conjuguent pour constituer la force d'actionnement de ce dernier.

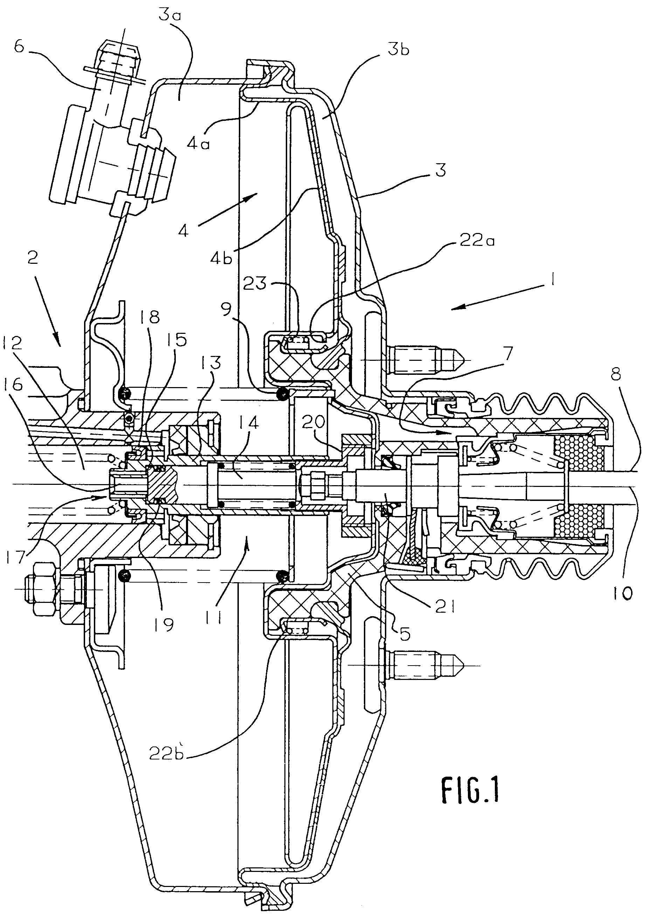

Plus précisément, la force d'actionnement est appliquée sur le piston hydraulique principal 11 du maître-cylindre et en provoque le déplacement vers la gauche (sur la figure 1) , ce qui entraîne une élévation de pression du liquide de freinage présent dans le volume intérieur 12 du maître-cylindre, et un actionnement du frein relié à ce dernier.

Le piston hydraulique principal 11 est en fait composite et comprend d'une part un cylindre 13 mobile et creux, et d'autre part un piston hydraulique secondaire 14.

Le volume intérieur 15 du cylindre mobile 13 communique avec le volume intérieur 12 du maître-cylindre par l'intermédiaire d'ouvertures, telles que 16 et 17, ménagées dans le cylindre mobile suivant une direction axiale.

En dehors du passage de fluide que permettent ces ouvertures 16 et 17 entre le volume intérieur 12 du maître-cylindre 2 et celui du cylindre mobile 13, ce cylindre mobile 13 coulisse de façon étanche dans le maître-cylindre 2, l'étanchéité étant obtenue grâce au moins à un joint annulaire 18.

Le piston hydraulique secondaire 14, quant à lui, coulisse à l'intérieur du cylindre mobile 13, qu'il obture de façon étanche grâce à un joint annulaire 19.

Le cylindre mobile 13 est relié, à travers la bague 20, à la jupe rigide 4b de manière à recevoir une partie au moins de la force d'assistance exercée par l'intermédiaire de cette jupe.

Le piston hydraulique secondaire 14 est disposée axialement, en regard d'une tige de poussée 21 susceptible de lui transmettre au moins la force d'entrée exercée sur la tige de commande 8.

Le fonctionnement du dispositif décrit jusqu'à présent est le suivant.

Lorsqu'une force d'entrée est appliquée sur la tige de commande 8, après une course prédéterminée de cette tige de commande 8, le clapet 7 ouvre à l'atmosphère la chambre arrière 3b du servomoteur, préalablement isolée de la chambre avant 3a, et une force d'assistance est appliquée au cylindre mobile 13 par la jupe rigide 4b à travers la bague 20. Une telle course de longueur prédéterminée de la tige de commande 8 est rendue possible en prévoyant un certain jeu entre l'extrémité avant de la tige de poussée 21 et l'extrémité arrière du piston hydraulique secondaire 14, sollicité en permanence vers le maître-cylindre par un ressort disposé entre un épaulement de la bague 20 et un épaulement du piston hydraulique secondaire 14.

La pression hydraulique dans le volume interne 12 du maître-cylindre s'élève et s'établit, par circulation de fluide hydraulique à travers les ouvertures 16 et 17, dans le volume interne 15 du cylindre mobile, faisant ainsi apparaître, sur le piston hydraulique secondaire 14, une force de réaction dépendant de la force d'assistance, s' opposant à la force d'entrée, et permettant donc le contrôle de la première force par la seconde.

Selon l'invention, la cloison mobile 4 est, de préférence par l'intermédiaire de sa jupe rigide 4b, montée coulissante sur le piston pneumatique 5 et peut coulisser par rapport à lui en direction du maître-cylindre 2, depuis une position de repos correspondant à la position de repos du servomoteur, représentée sur la figure 1, et dans laquelle la jupe 4b vient en butée contre le piston pneumatique 5 sous l'effet des ressorts de rappel du maître-cylindre 2 suivant une direction opposée à celle qui pointe vers le maître-cylindre 2.

D'autre part, la jupe 4b et le piston pneumatique 5 présentent des butées respectives 22a, 22b, en regard l'une de l'autre, permettant à la jupe 4b de n'entraîner le piston pneumatique 5 qu'après une certaine course, et permettant éventuellement d'emprisonner un ressort hélicoïdal 23 ou tout autre moyen élastique tendant à éviter un libre coulissement de cette jupe sur ce piston pneumatique sur toute la longueur du mouvement possible entre ces deux pièces, et un entraînement brutal de l'une par l'autre.

Grâce à ces caractéristiques, le dispositif de freinage de l'invention permet d'obtenir, dans le maître-cylindre 2, une pression relativement élevée, par rapport à celles qui sont typiquement obtenues dans les dispositifs connus, pour toute course de faible amplitude de la tige de commande 8.

Cet effet peut être expliqué de la façon suivante.

La force d'assistance développée par le servomoteur dépend de la différence de pression entre les chambres 3a et 3b, celle-ci dépendant elle-même de l'ouverture du clapet 7.

L'ouverture de ce clapet dépend du mouvement relatif entre la tige de commande 8 et le piston pneumatique 5, lui aussi mobile et portant le clapet 7.

En permettant à la cloison mobile 4 d'avancer, au début de l'actionnement du servomoteur, vers le maître-cylindre 2, donc d'augmenter la pression interne du liquide présent dans ce dernier, sans entraîner totalement et immédiatement le piston pneumatique 5, l'invention permet que le mouvement relatif de la tige de commande 8 par rapport à ce piston 5 s'approche du mouvement absolu de cette tige 8 repéré par rapport à un point fixe de l'espace, ce dont résulte, à course égale pour la tige de commande 8, l'apparition d'une pression plus élevée dans le maître-cylindre 2.

Lorsque les butées 22a et 22b sont arrivées au contact les unes des autres, il n'y a plus, au cours de la poursuite de l'actionnement du servomoteur, de mouvement relatif entre la jupe 4b et le piston 5 qui se déplacent alors ensemble comme dans un servomoteur classique, en conservant une différence de pression dans le maître-cylindre 2 par rapport à l'art antérieur.

On voit donc que l'invention permet d'obtenir un dispositif de freinage assisté dans lequel une partie de la course de la jupe 4b, et du piston hydraulique principal 11 du maître-cylindre, est masquée par rapport à la course de la tige de commande 8, de façon à obtenir en fonctionnement une pression plus élevée dans le maître-cylindre.

Un autre avantage important procuré par l'invention réside dans le fait que la bague 20, interposée entre la jupe rigide 4b et le cylindre mobile 13, permet par son réglage, par exemple par vissage ou dévissage, de faire varier la distance au repos entre l'extrémité avant de la tige de poussée 21 et l'extrémité arrière du piston hydraulique secondaire 14, et ainsi de régler la valeur du saut de servomoteur, qui en constitue un paramètre important de fonctionnement.

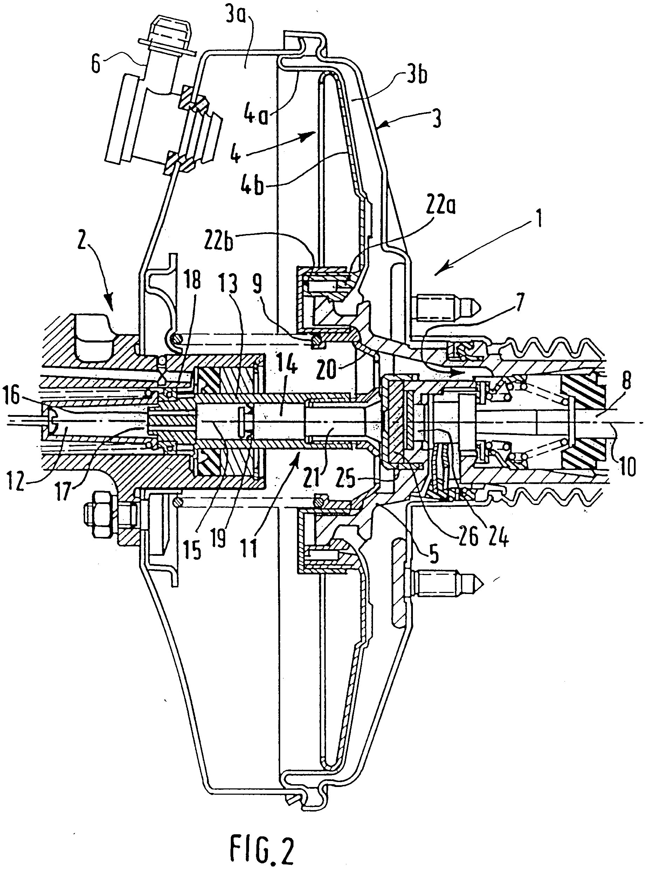

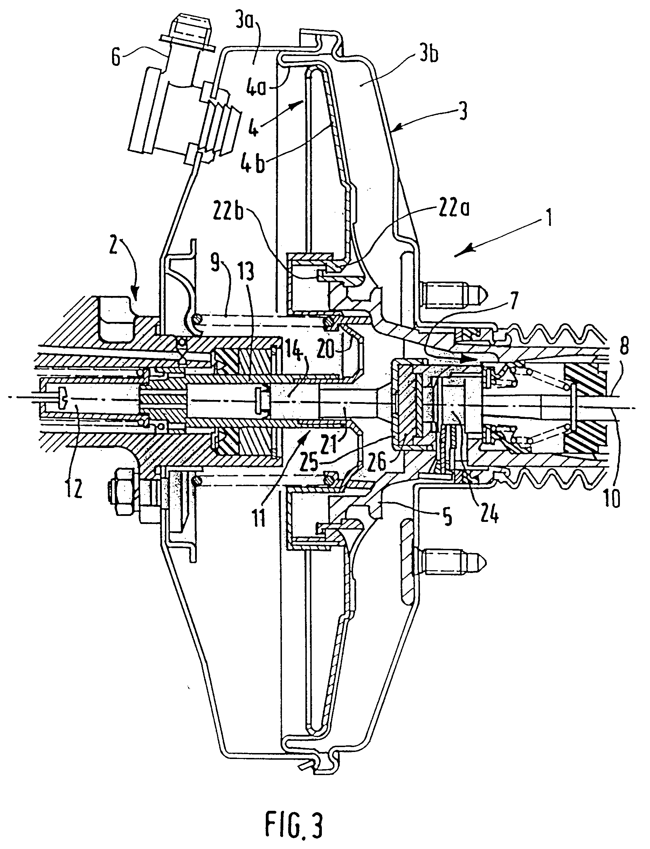

On a représenté sur les Figures 2 et 3 deux positions de fonctionnement d'un servomoteur réalisé selon une variante du mode de réalisation qui vient d'être décrit. Sur ces figures, les éléments identiques ou analogues à ceux de la Figure 1 portent les mêmes numéros de référence.

Selon cette variante de réalisation, le piston secondaire 14 est constitué par le prolongement axial de la tige de poussée 21 susceptible de lui transmettre d'une part la force d'entrée exercée sur la tige de commande 8 et d'autre part une fraction de la force d'assistance développée par le piston pneumatique 5, ces forces étant transmises de façon en soi connue, par l'intermédiaire d'un disque de réaction 26 sur une face duquel s'appuient ce piston pneumatique et un palpeur 24 actionné par la tige de commande, et dont l'autre face s'appuie sur une coupelle 25 solidaire de la tige de poussée 21.

Le fonctionnement de ce servomoteur est tout à fait semblable à celui de la Figure 1 : lorsqu'une force d'entrée est appliquée sur la tige de commande 8, après une course prédéterminée de la tige de poussée 8, le clapet 7 ouvre à l'atmosphère de la chambre arrière 3b du servomoteur, préalablement isolée de la chambre avant 3a, et une force d'assistance est appliquée au cylindre mobile 13 par la jupe rigide 4b à travers la bague 20.

La pression hydraulique dans le volume interne 12 du maître-cylindre s'élève de façon nette et s'établit, par circulation de fluide hydraulique à travers les passages 16 et 17, dans le volume interne 15 du cylindre mobile, faisant ainsi apparaître, sur le piston hydraulique secondaire 14, une force de réaction dépendant de la force d'assistance, s'opposant à la force transmise à travers le disque de réaction 23, et permettant le contrôle de la force d'assistance par la force d'entrée, au moyen d'une réaction mixte, c'est-à-dire à la fois hydraulique et mécanique.

Comme l'on décrit plus haut, la cloison mobile 4 est, de préférence par l'intermédiaire de sa jupe rigide 4b, montée coulissante sur le piston pneumatique 5 et peut coulisser par rapport à lui en direction du maître-cylindre 2.

Plus précisément, le coulissement relatif s'effectue depuis une position de repos correspondant à la position de repos du servomoteur, telle que représentée sur la figure 2 et dans laquelle la jupe 4b vient en butée, en l'occurrence à travers la bague 20, contre le piston pneumatique 5 sous l'effet des ressorts de rappel du maître-cylindre 2 suivant une direction opposée à celle qui pointe vers le maître-cylindre 2, jusqu'à une position représentée sur la figure 3 dans laquelle la jupe 4b entraîne le piston pneumatique 5 vers le maître-cylindre.

Les butées respectives 22a, 22b, en regard l'une de l'autre, garantissent que la jupe 4b n'entraînera le piston pneumatique 5 qu'après une course relative prédéterminée correspondant à la distance séparant ces butées au repos.

Cette variante de réalisation permet de la même façon d'obtenir, dans le maître-cylindre 2, une pression relativement élevée, par rapport à celles qui sont uniquement obtenues dans les dispositifs connus, pour toute course de faible amplitude de la tige de commande 8, et en utilisant un disque de réaction.

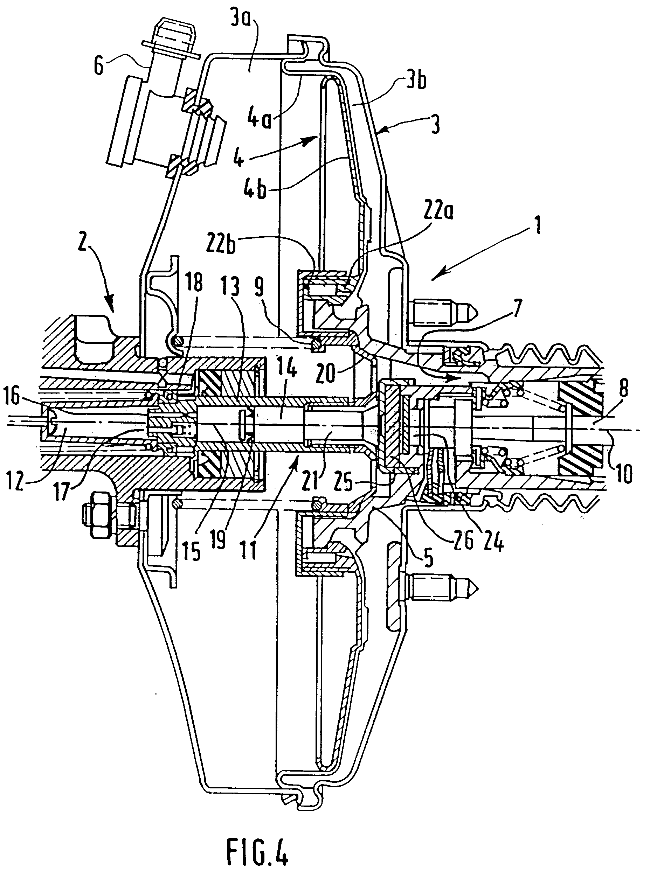

On a représenté sur la Figure 4 une autre variante de réalisation de l'invention, applicable aussi bien au servomoteur décrit sur la Figure 1 qu'à celui qui est décrit sur les Figures 2 et 3.

En effet, lors de l'actionnement du dispositif de freinage, on a vu que, après un première phase de fontionnement, l'ensemble jupe rigide 4b - piston pneumatique 5 se déplace d'un bloc vers la gauche (sur les figures), dans la position relative représentée sur la Figure 3, la pression dans la chambre arrière 3b augmentant progressivement.

Lorsque cette pression est devenue égale à la pression atmosphérique, le servomoteur est parvenu dans une phase dite de saturation et la force d'assistance ne peut plus augmenter et reste constante, alors que la force d'entrée est susceptible d'être encore accrue par le conducteur du véhicule.

Il s'ensuit que, au début de cette phase de saturation, le bilan des forces en présence montre que l'accroissement de la force d'entrée sur la tige de commande 8 a pour seul effet de faire avancer le piston pneumatique 5 et de faire reculer la jupe rigide 4b jusqu'à ce qu'ils reprennent leur contact mutuel, de sorte que le piston pneumatique 5 entraîne la jupe 4b vers le maître-cylindre.

Durant cette course du piston 5, et donc de la tige de commande 8 et de la pédale de frein qui lui est reliée, aucune augmentation de pression n'est intervenue dans le volume intérieur 12 du maître-cylindre - ce phénomène peut être ressenti de façon désagréable par le conducteur, et la variante illustrée sur la Figure 4 y remédie.

On voit sur cette Figure que le volume intérieur 15 du cylindre mobile 13 communique avec le volume intérieur 12 du maître-cylindre 2 à travers au moins un orifice de ralentissement de circulation de fluide, tel qu'un restricteur de débit disposé dans le passage 16, et à travers au moins un clapet anti-retour, par exemple disposé dans le passage 17, qui n'autorise la circulation de fluide de freinage qu'en provenance du maître-cylindre vers le cylindre mobile.

L'ensemble restricteur - clapet anti-retour constitue ainsi un réducteur sélectif de débit, sans influence notable sur le fonctionnement du servomoteur avant la phase de saturation, mais qui permet au début de celle-ci de faire avancer le cylindre mobile 13 lorsque le piston pneumatique avance, et donc d'obtenir une augmentation de pression continue dans le maître-cylindre, lorsque le conducteur du véhicule continue d'appuyer sur la pédale de frein.

## Revendications

1. Dispositif de freinage assisté pour véhicule à moteur, comprenant d'une part un maître-cylindre (2) rempli d'un fluide de freinage et équipé d'un piston hydraulique principal (11) destiné à recevoir une force d'actionnement se composant d'une force d'entrée et d'une force d'assistance agissant toutes deux suivant une direction axiale, et d'autre part un servomoteur pneumatique d'assistance (1) susceptible d'être commandé par application de ladite force d'entrée sur une tige de commande (8) contrôlant l'ouverture d'un clapet (7), pour exercer ladite force d'actionnement sur le piston hydraulique principal, le servomoteur comportant une enveloppe rigide (3) séparée de façon étanche en deux chambres (3a, 3b) au moyen au moins d'une cloison mobile (4), susceptible d'être sollicitée par une différence de pression entre les deux chambres résultant de l'ouverture du clapet et d'entraîner un piston pneumatique (5), mobile par rapport à l'enveloppe, portant ledit clapet et contribuant au moins à transmettre ladite force d'assistance, le piston hydraulique principal du maître-cylindre comporte lui-même un cylindre mobile (13), creux, communiquant avec le maître-cylindre, recevant une partie au moins de la force d'assistance, et à l'intérieur duquel coulisse, de façon étanche et suivant la direction axiale, un piston hydraulique secondaire (14) susceptible de recevoir au moins ladite force d'entrée, caractérisé en ce que la cloison mobile (4) est montée coulissante sur le piston pneumatique (5) de manière à pouvoir coulisser par rapport à lui en direction du maître-cylindre, depuis une position relative initiale dans laquelle elle est en butée contre le piston pneumatique suivant une direction opposée à celle qui pointe vers le maître-cylindre, et en ce que cette cloison mobile (4), lorsqu'elle est sollicitée par une différence de pression, appuie au moins indirectement sur le cylindre mobile (13) en direction du maître-cylindre.

2. Dispositif de freinage suivant la revendication 1, caractérisé en ce que des moyens élastiques (23) sont disposés entre le piston pneumatique et la cloison mobile pour engendrer une force élastique s'opposant au libre coulissement relatif de cette cloison mobile et de ce piston pneumatique.

3. Dispositif de freinage suivant la revendication 1, caractérisé en ce que un moyen réglable (20) est interposé entre la cloison mobile (4) et le cylindre mobile (13) pour régler la valeur du saut du servomoteur.

4. Dispositif de freinage suivant la revendication 2, caractérisé en ce que le cylindre mobile (13) communique avec le maître-cylindre (2) à travers au moins un orifice de ralentissement de circulation de fluide et à travers au moins un clapet anti-retour (17) qui n'autorise la circulation de fluide de freinage qu'en provenance du maître-cylindre (2) vers le cylindre mobile (13).

5. Dispositif de freinage suivant la revendication 1, dans lequel ladite force d'entrée est transmise par l'intermédiaire d'un disque de réaction (23) sur lequel s'appuie également ledit piston pneumatique pour lui fournir une partie au moins de ladite force d'assistance, caractérisé en ce que le piston hydraulique principal du maître-cylindre comporte lui-même un cylindre mobile (13), creux, qui communique avec le maître-cylindre, qui coopère avec la cloison mobile pour recevoir une partie au moins de la force d'assistance communiquée par cette dernière, et à l'intérieur duquel coulisse, de façon étanche et suivant la direction axiale, un piston hydraulique secondaire (14) susceptible de recevoir ladite force d'entrée et ladite partie au moins de la force d'assistance, en provenance du disque de réaction, et en ce que la cloison mobile (4) est montée coulissante sur le piston pneumatique (5) de manière à pouvoir coulisser par rapport à lui, sur une course prédéterminée, en direction du maître-cylindre, depuis une position relative initiale dans laquelle elle est en butée contre le piston pneumatique suivant une direction opposée à celle qui pointe vers le maître-cylindre jusqu'à une position finale dans laquelle cette cloison mobile peut entraîner le cylindre mobile (13) en direction du maître-cylindre.

6. Dispositif de freinage suivant la revendication 5, caractérisé en ce que le cylindre mobile (13) communique avec le maître-cylindre (2) à travers au moins un orifice de ralentissement de circulation de fluide et à travers au moins un clapet anti-retour (17) qui n'autorise la circulation de fluide de freinage qu'en provenance du maître-cylindre (2) vers le cylindre mobile (13).

## Claims

1. Boosted brake device for a motor vehicle, comprising, on the one hand, a master cylinder (2) filled with a brake fluid and equipped with a main hydraulic piston (11) intended to receive an actuation force composed of an input force and a booster force both acting in an axial direction, and, on the other hand, a pneumatic booster (1) capable of being activated by applying the said input force to a control rod (8) for opening a valve (7), in order to exert the said actuation force on the main hydraulic piston, the booster comprising a rigid casing (3) separated in leaktight fashion into two chambers (3a, 3b) by means of at least one movable partition (4), capable of being stressed by a pressure difference between the two chambers resulting from opening the valve and of driving a pneumatic piston (5) which can move with respect to the casing, carrying said valve and contributing at least to transmitting said booster force, the main hydraulic piston of the master cylinder itself comprising a hollow movable cylinder (13) communicating with the master cylinder, receiving at least part of the booster force, and inside which there slides, in leak-tight fashion and in the axial direction, a secondary hydraulic piston (14) capable of receiving at least said input force, characterized in that the movable partition (4) is mounted slidingly on the pneumatic piston (5) so as to be able to slide with respect to it in the direction of the master cylinder from an initial relative position in which it abuts against the pneumatic piston in a direction opposite that which points towards the master cylinder, and in that this movable partition (4), when it is stressed by a pressure difference, presses at least indirectly on the movable cylinder (13) in the direction of the master cylinder.

2. Brake device according to claim 1, characterized in that elastic means (23) are arranged between the pneumatic piston and the movable partition in order to generate an elastic force opposing the free relative sliding of this movable partition and of this pneumatic piston.

3. Brake device according to claim 1, characterized in that an adjustable means (20) is interposed between the movable partition (4) and the movable cylinder (13) for adjusting the jump value of the booster.

4. Brake device according to claim 2, characterized in that the movable cylinder (13) communicates with the master cylinder (2) through at least one fluid flow decelerating orifice and through at least one non-return valve (17) which only allows brake fluid to flow from the master cylinder (2) towards the movable cylinder (13).

5. Brake device according to claim 1, wherein said input force is transmitted by means of a reaction disk (23) on which said pneumatic piston also bears to supply at least part of sait booster force to it, characterized in that the main hydraulic piston of the master cylinder itself comprises a hollow movable cylinder (13) which communicates with the master cylinder, which interacts with the movable partition to receive at least part of the booster force communicated by the latter, and inside which there slides, in leaktight fashion and in the axial direction, a secondary hydraulic piston (14) capable of receiving said input force, and said at least part of the booster force from the reaction disk, and in that the movable partition (4) is mounted slidingly on the pneumatic piston (5) so as to be able to slide with respect to it over a predetermined travel in the direction of the master cylinder from an initial relative position in which it abuts against the pneumatic piston in a direction opposite that which points towards the master cylinder as far as a final position in which this movable partition can drive the movable cylinder (13) in the direction of the master cylinder.

6. Brake device according to claim 5, characterized in that the movable cylinder (13) communicates with the master cylinder (2) through at least one fluid flow decelerating orifice and through at least one non-return valve(17) which only allows brake fluid to flow from the master cylinder (2) towards the movable cylinder (13).

## Patentansprüche

1. Bremsvorrichtung zum unterstützten Bremsen für ein Kraftfahrzeug, die einerseits einen mit einer Bremsflüssigkeit gefüllten Hauptzylinder (2), der mit einem Haupthydraulikkolben (11) ausgestattet ist, der dazu bestimmt ist, eine Betätigungskraft aufzunehmen, die aus einer Eingangskraft und einer Unterstützungskraft zusammengesetzt ist, die alle beide längs einer axialen Richtung wirken, und andererseits einen pneumatischen Bremskraftverstärker (1) aufweist, der durch Aufbringen der Eingangskraft auf eine Steuerstange (8) gesteuert werden kann, die das Öffnen eines Ventils (7) kontrolliert, um die Betätigungskraft auf den Haupthydraulikkolben aufzubringen, wobei der Bremskraftverstärker ein starres Gehäuse (3) aufweist, das dicht in zwei Kammern (3a, 3b) aufgeteilt ist mittels wenigstens einer beweglichen Trennwand (4), die durch eine Druckdifferenz zwischen den beiden Kammern vorgespannt werden kann, die sich aus dem Öffnen des Ventils ergibt, und die einen bezüglich des Gehäuses beweglichen pneumatischen Kolben (5) antreiben kann, der das Ventil hält und wenigstens zur Übertragung der Unterstützungskraft beiträgt, wobei der Haupthydraulikkolben des Hauptzylinders seinerseits einen beweglichen, hohlen Zylinder (13) aufweist, der mit dem Hauptzylinder in Verbindung steht, wenigstens einen Teil der Hilfskraft aufnimmt, und in dessen Innerem ein Sekundärhydraulikzylinder (14) dicht und längs der axialen Richtung gleitet, der wenigstens die Eingangskraft aufnehmen kann, dadurch gekennzeichnet, daß die bewegliche Trennwand (4) derart gleitend an dem pneumatischen Kolben (5) angebracht ist, daS sie dazu aus einer Anfangsrelativposition, in der sie sich längs einer Richtung, die derjenigen entgegengesetzt ist, die zu dem Hauptzylinder zeigt, in Anlage an dem pneumatischen Kolben befindet, in Richtung des Hauptzylinders gleiten kann, und daß diese bewegliche Trennwand (4) dann, wenn sie durch eine Druckdifferenz vorgespannt ist, wenigstens indirekt auf den beweglichen Zylinder (13) in Richtung des Hauptzylinders drückt.

2. Bremsvorrichtung nach Anspruch 1, dadurch gekennzeichnet, daß elastische Mittel (23) zwischen dem pneumatischen Kolben und der beweglichen Trennwand angeordnet sind, um eine elastische Kraft zu erzeugen, die dem freien Relativgleiten dieser beweglichen Trennwand und dieses pneumatischen Kolbens entgegenwirkt.

3. Bremsvorrichtung nach Anspruch 1, dadurch gekennzeichnet, daß ein regelbares Mittel (20) zwischen der beweglichen Trennwand (4) und dem beweglichen Zylinder (13) angeordnet ist, um den Wert des Sprungs des Bremskraftverstärkers zu regeln.

4. Bremsvorrichtung nach Anspruch 2, dadurch gekennzeichnet, daß der bewegliche Zylinder (13) mit dem Hauptzylinder (2) über wenigstens eine Öffnung zur Verlangsamung des Fließens von Flüssigkeit und über wenigstens ein Rückschlagventil (17) in Verbindung steht, das das Fließen der Bremsflüssigkeit nur von dem Hauptzylinder (2) zu dem beweglichen Zylinder (13) zuläßt.

5. Bremsvorrichtung nach Anspruch 1, bei welcher die Eingangskraft über eine Reaktionsscheibe (23) übertragen wird, an der auch der pneumatische Kolben anliegt, um ihr wenigstens einen Teil der Unterstützungskraft zu übertragen, dadurch gekennzeichnet, daß der Haupthydraulikkolben des Hauptzylinders seinerseits einen beweglichen, hohlen Zylinder (13) aufweist, der mit dem Hauptzylinder in Verbindung steht, mit der beweglichen Trennwand zusammenwirkt, um wenigstens einen Teil der von dieser mitgeteilten Unterstützungskraft aufzunehmen, und in dessen Innerem ein Sekundärhydraulikzylinder (14) dicht und längs der axialen Richtung gleitet, der die Eingangskraft und wenigstens den Teil der von der Reaktionsscheibe stammenden Unterstützungskraft aufnehmen kann, und daß die bewegliche Trennwand (4) derart gleitend an dem pneumatischen Kolben (5) angebracht ist, daß sie relativ zu diesem mit einem vorbestimmten Hub aus einer Anfangsrelativposition, in der sie längs einer Richtung, die derjenigen entgegengesetzt ist, die zu dem Hauptzylinder zeigt, sich in Anlage an dem pneumatischen Kolben befindet, in Richtung des Hauptzylinders bis zu einer Endposition gleiten kann, in der diese bewegliche Trennwand den beweglichen Zylinder (13) in Richtung des Hauptzylinders antreiben kann.

6. Bremsvorrichtung nach Anspruch 5, dadurch gekennzeichnet, daß der bewegliche Zylinder (13) mit dem Hauptzylinder (2) über wenigstens eine Öffnung zur Verlangsamung des Fließens von Flüssigkeit und über wenigstens ein Rückschlagventil (17) in Verbindung steht, das das Fließen der Bremsflüssigkeit nur von dem Hauptzylinder (2) zu dem beweglichen Zylinder (13) zuläßt.
